(19) Europäisches Patentamt
European Patent Office
Office européen des brevets

(11) Veröffentlichungsnummer : **0 044 483**
**B1**

(12) # EUROPÄISCHE PATENTSCHRIFT

(45) Veröffentlichungstag der Patentschrift : **02.05.84**

(51) Int. Cl.$^3$ : **D 06 P 3/66**, C 09 B 62/00

(21) Anmeldenummer : **81105389.1**

(22) Anmeldetag : **10.07.81**

(54) **Reaktivfärbeverfahren.**

(30) Priorität : **21.07.80 DE 3027546**

(43) Veröffentlichungstag der Anmeldung : **27.01.82 Patentblatt 82/04**

(45) Bekanntmachung des Hinweises auf die Patenterteilung : **02.05.84 Patentblatt 84/18**

(84) Benannte Vertragsstaaten : **CH DE FR GB IT LI**

(56) Entgegenhaltungen :
**EP-A- 0 017 805**
**DE-A- 2 057 120**
**DE-A- 2 145 827**
**DE-A- 2 514 531**
**DE-A- 2 613 049**
**DE-A- 2 803 289**
**GB-A- 973 906**
**GB-A- 2 027 754**
**D. HILDEBRAND: "The Chemistry of Synthetic Dyes", Band VI, Reactive Dyes, 1972, VENKATARAMAN, Academic Press, NEW. YORK (US) Chapter III: "Reactive Dyes; Application and Properties", Seiten 327-449**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Hildebrand, Dietrich, Dr.**
**Wingensiefer Kamp 13**
**D-5068 Odenthal (DE)**
Erfinder : **Lohnert, Wolfgang**
**Am Büscherhof 11**
**D-5653 Leichlingen (DE)**

**EP 0 044 483 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Reaktivfärbeverfahren

Die vorliegende Erfindung betrifft ein neues Verfahren zum Färben von Cellulosefasern, welches dadurch gekennzeichnet ist, daß man mindestens zwei verschiedene Reaktivfarbstoffe, deren Färbungen auf Cellulose den gleichen Farbton ergeben und die eine jeweils um mindestens den Faktor 10 verschiedene Reaktivität besitzen, im gleichen Färbebad einsetzt.

Ein Unterschied in der Reaktivität vom Faktor 10 entspricht einem Unterschied in der Hydrolysenkonstante bei pH 11, (40°) von einer Zehnerpotenz, bzw. einem Unterschied in der optimalen Färbetemperatur von 20°. (Siehe dazu : D. Hildebrand in Venkataraman : The Chemistry of Synthetic Dyes Volume VI, Academic Press, Inc., New York 1972, Seite 352).

Aus der DE-A-2 514 531 ist ein bestimmtes Verfahren zum Färben von Cellulose/Polyester-Mischfasern bekannt, wobei es Ziel dieser Publikation ist, Mischfasern aus Cellulose/Polyester so zu färben, daß beide Fasertypen in den Fasergemischen in dem gleichen Farbton und auf die gleiche Farbtontiefe gefärbt werden. Nötigenfalls wird dies dadurch erreicht, daß man Gemische von Dispersionsfarbstoffen und/oder Gemische von Reaktivfarbstoffen verwendet. Siehe dazu DE-A-2 514 531 S. 24, Zeile 16 bis 25, Zeile 2.

Man mischt also Dispersions- und/oder Reaktivfarbstoffe, um für beide Fasertypen jeweils gleiche oder beinahe gleiche Farbtöne zu erhalten.

Die Zielrichtung der vorliegenden Erfindung ist jedoch völlig anders, denn gemäß vorliegender Anmeldung werden Farbstoffe mit von vorneherein gleichem oder fast gleichem Farbton und um mindestens den Faktor 10 verschiedener Reaktivität für das Färben von Cellulose kombiniert.

Als erfindungsgemäß zu verwendende Reaktivfarbstoffe kommen vorzugsweise sulfogruppenhaltige Farbstoffe aus der Azo-, Azometallkomplex-, Anthrachinon-, Oxazin-, Formazan- und Phthalocyaninreihe in Betracht, die mindestens eine Dichlortriazinyl-, Dichlorchinoxalinyl-, Monofluortriazinyl-, Difluorpyrimidinyl-, Monofluorpyrimidinyl-, Sulfatoethylsulfonyl-, Monochlortriazinyl-, Trichlorpyrimidinylgruppe aufweisen. Diese vorgenannten Reaktivfarbstoffe sind in der Literatur in großer Zahl beschrieben worden.

Wie bereits oben erwähnt, werden beim erfindungsgemäßen Verfahren verschiedene Reaktivfarbstoffe mit einer um mindestens den Faktor 10 verschiedenen Reaktivität eingesetzt.

Die Auswahl der zu kombinierenden Reaktivfarbstoffe gelingt in einfacher Weise durch Bestimmung der jeweiligen Hydrolysekonstante bei pH 11 und 40 °C nach an sich bekannten physikalisch-chemischen Methoden. Siehe dazu : D. Hildebrand in Venkataraman « The Chemistry of Synthetic Dyes », Vol. VI, Academic Press, New York, Seite 348. Die beim erfindungsgemäßen Färbeverfahren eingesetzten Reaktivfarbstoffe müssen sich bezüglich ihrer Hydrolysekonstanten um mindestens den Faktor 10 unterscheiden. Die erfindungsgemäß kombinierten Reaktivfarbstoffe unterscheiden sich in ihren optimalen Fixiertemperaturen vorzugsweise um mindestens 20 bis etwa 40 °C.

Vorzugsweise kombiniert man beim erfindungsgemäßen Verfahren mindestens zwei gleichfarbige Farbstoffe aus jeweils einer der im folgenden aufgeführten zehn Kombinationsreihen, wobei das Mischungsverhältnis der einzelnen Farbstoffkomponenten in weiten Grenzen variieren kann, besonders geeignet sind hierbei jedoch Mischungsverhältnisse von 1 : 4 bis 4 : 1.

1) Dichlortriazinyl-, Monofluortriazinyl-, Monochlortriazinyl-,
2) Dichlortriazinyl-, Dichlorchinoxalinyl-, Monochlortriazinyl-,
3) Dichlortriazinyl-, Monofluortriazinyl-, Trichlorpyrimidinyl-,
4) Difluorpyrimidinyl-, Sulfatoethylsulfonyl-, Trichlorpyrimidinyl-,
5) Dichlorchinoxalinyl-, Sulfatoethylsulfonyl-, Trichlorpyrimidinyl-,
6) Monofluortriazinyl-, Sulfatoethylsulfonyl-, Trichlorpyrimidinyl-,
7) Dichlortriazinyl-, Monofluorpyrimidinyl-, Trichlorpyrimidinyl-,
8) Dichlorchinoxalinyl-, Monofluorpyrimidinyl-, Trichlorpyrimidinyl-,
9) Difluorpyrimidinyl-, Monofluorpyrimidinyl-, Trichlorpyrimidinyl-,
10) Monofluortriazinyl-, Monofluorpyrimidinyl-, Trichlorpyrimidinyl-Reaktivfarbstoff.

Vorzugsweise werden Reaktivfarbstoffe kombiniert, die jeweils den gleichen chromophoren Rest aufweisen.

Die Anwendung erfolgt unter den in der Praxis üblichen Färbebedingungen in Gegenwart von 5 bis 150, vorzugsweise 50 bis 100 Gramm Salz pro Liter Flottenlösung wie z. B. Kochsalz oder Natriumsulfat bei pH-Werten von 8 bis 13 insbesondere pH 9 bis 12 und 20 bis 130 °C. Zur Einstellung des pH-Wertes eignen sich Alkalispender wie Natriumcarbonat, Natriumbicarbonat, Natronlauge und die Alkalisalze der Phosphorsäure (z. B. $NaH_2PO_4$, $Na_2HPO_4$, $Na_3PO_4$ oder deren Gemische), der pH-Wert des Färbebades kann während des gesamten Färbeprozesses konstant gehalten oder durch stufenweise Alkalizugaben gesteigert werden.

Das Verfahren eignet sich zum Färben von losem Material, Garn, Gewebe und Gewirk auf den für die einzelnen Verarbeitungsstufen bekannten Färbeaggregaten wie Packapparat, Garnfärbeapparat, Haspelkufe, Jetfärbeanlage, Baumfärbeapparat und Jigger.

Das Verfahren liefert Färbungen mit im überraschenden Maße verbesserter Egalität sowie verbesserter Durchfärbung und Ausbeute.

Die Verwendung von Färbeflotten, die in einer Farbe mindestens zwei in ihrem optimalen Fixierverhalten grundsätzlich verschiedene Reaktivsysteme aufweisen, ist bisher nur bekannt für den Fall, daß die verschiedenen Reaktivsysteme an dem gleichen Farbstoffrest haften. (Siehe dazu z. B. DE-A-2 607 028 und DE-A-2 603 670).

Derartige Farbstoffe, die die verschiedenen Reaktivsysteme am gleichen Farbstoffrest besitzen, zeigen bereits eine verbesserte Fixierausbeute im Vergleich zu Farbstoffen, welche nur die eine oder die andere Reaktivgruppe aufweisen, zeigen jedoch auch eine verschlechterte Ausspülbarkeit und keine Verbesserung der Durchfärbung, wodurch der mit der Erhöhung der Fixierausbeute verbundene Vorteil zumindest teilweise wieder verloren geht. Es wurde nun in überraschender Weise gefunden, daß nach dem erfindungsgemäßen Verfahren auch tongleiche Mischungen von Farbstoffen mit Reaktivgruppen, welche einen großen Reaktivitätsunterschied aufweisen, unter den gleichen Färbebedingungen höhere Fixierausbeuten als die Summe der Einzelfarbstoffe in gleicher Farbtiefe und unter den gleichen Färbebedingungen erzielt werden, ohne daß die Auswaschbarkeit herabgesetzt wird.

Bei den in den folgenden Beispielen bezeichneten « Teilen » handelt es sich in allen Fällen um Gewichtsteile.

Beispiel 1

100 Teile einer Baumwollwirkware werden auf einer Haspelkufe mit einer Farbflotte behandelt, welche aus

3 Teilen des Farbstoffs I (Struktur siehe unten)
3 Teilen des Farbstoffs II (Struktur siehe unten)
25 Teilen Natriumcarbonat
100 Teilen Natriumsulfat und
1 869 Teilen Wasser

besteht.

Die Flotte wird in 1 Stunde von 20 auf 80 °C erwärmt und 1 Stunde bei dieser Temperatur gehalten. Nach dem üblichen Spülen und Seifen erhält man eine tiefe Rotfärbung mit guten Echtheitseigenschaften.

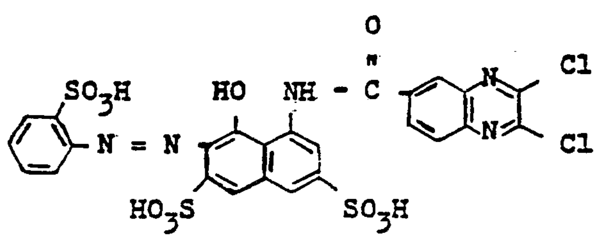
(I)

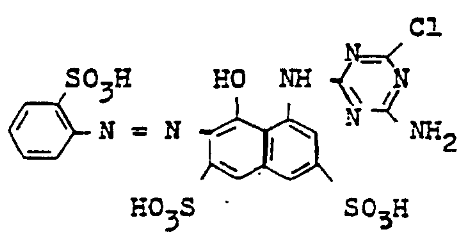
(II)

Beispiel 2

100 Teile einer Fasermischung bestehend aus 50 Teilen Baumwolle und 50 Teilen Zellwolle werden in einem Packfärbeapparat mit einer Farbflotte behandelt, welche aus

2 Teilen des Farbstoffs I (Struktur siehe unten)
2 Teilen des Farbstoffs II (Struktur siehe unten)
2 Teilen des Farbstoffs III (Struktur siehe unten)
20 Teile Natriumcarbonat
100 Teile Natriumchlorid und
1 874 Teile Wasser

besteht.

Die Flotte wird in 80 Minuten von 20 auf 100° gebracht und 30 Minuten bei dieser Temperatur gehalten. Nach dem üblichen Spülen und Seifen erhält man eine egale Rotfärbung mit guten Echtheitseigenschaften.

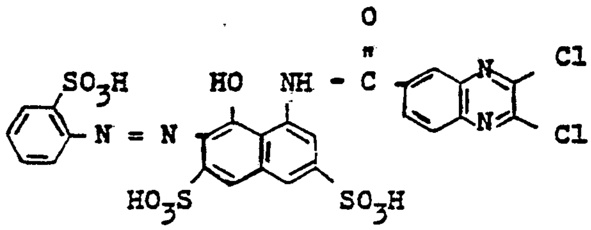

(I)

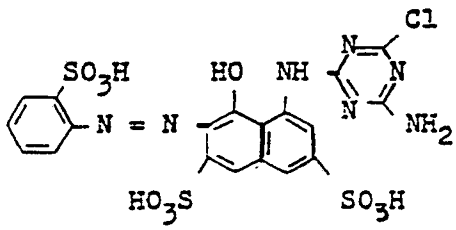

(II)

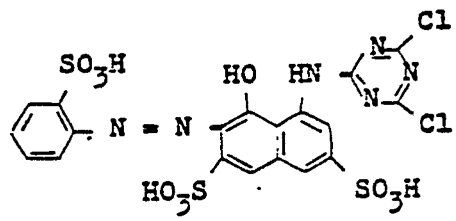

(III)

Beispiel 3

100 Teile einer mercerisierten Baumwollwirkware werden auf einem Jetfärbeaggregat mit einer Flotte behandelt, welche aus

1,5 Teilen des Farbstoffs IV (Struktur siehe unten)
1,5 Teilen des Farbstoffs V (Struktur siehe unten)
2,0 Teilen Mononatriumphosphat
100 Teilen Natriumsulfat und
900 Teilen Wasser besteht.

Die Flotte wird in 30 Minuten von 20 auf 60° erwärmt und dann über das Ansatzgefäß aus einem mit Dosiereinrichtung versehenen Vorratsbehälter über 2 Stunden 2 Teile Natronlauge 38° Be in 6 Teilen Wasser zugetropft. Das Zutropfen erfolgt in der Weise, daß man in der ersten Stunde 1/5 und in der zweiten Stunde die restlichen 4/5 der verdünnten Natronlauge zugibt. Man erhält eine tiefe Rotfärbung mit guten Echtheitseigenschaften.

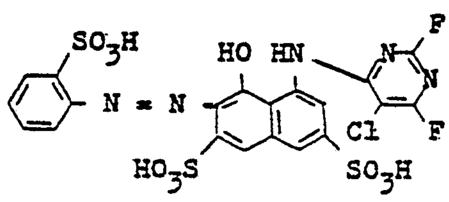

(IV)

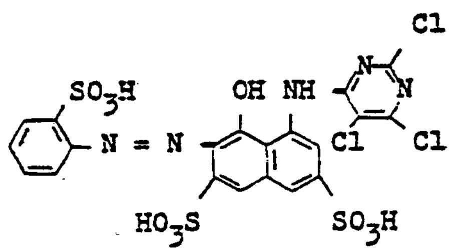

(V)

Beispiel 4

100 Teile eines Mischgarnes bestehend aus 50 Teilen Baumwolle und 50 Teilen Zellwolle werden auf einem Garnfärbeapparat mit 1 000 Teilen einer Flotte behandelt, welche aus

1,0 Teilen des Farbstoffs VI (Struktur siehe unten)
0,5 Teilen des Farbstoffs VII (Struktur siehe unten)
0,8 Teilen des Farbstoffs VIII (Struktur siehe unten)
0,4 Teilen des Farbstoffs IX (Struktur siehe unten)
1,3 Teilen des Farbstoffs X (Struktur siehe unten)
1,0 Teilen des Farbstoffs XI (Struktur siehe unten)
15 Teilen $Na_2CO_3$
80 Teilen Natriumsulfat
900 Teilen Wasser besteht.

Man erwärmt in 60 Minuten von 20 auf 80° und färbt 1 Stunde bei dieser Temperatur. Nach dem üblichen Spülen und Seifen erhält man eine egale Braunfärbung mit guten Echtheitseigenschaften.

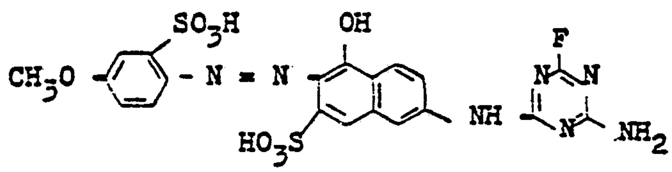

(VI)

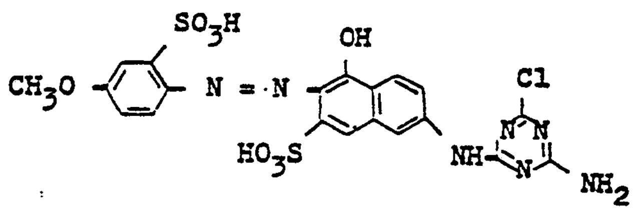

(VII)

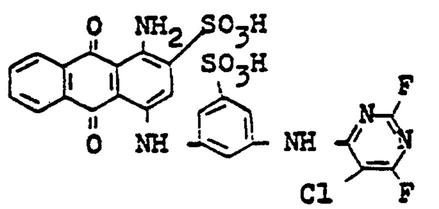

(VIII)

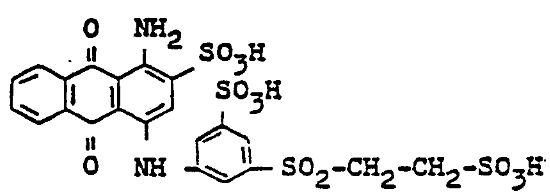

(IX)

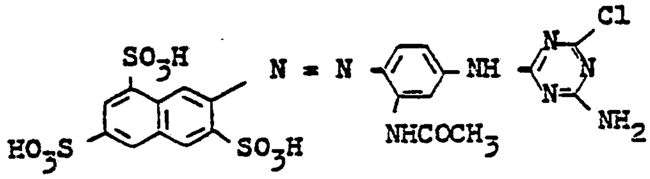

(X)

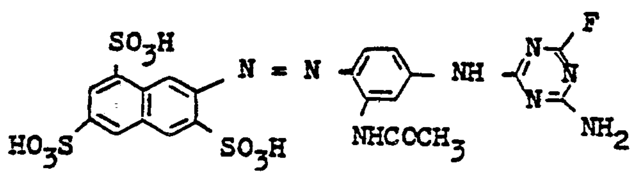

(XI)

Beispiel 5

100 Teile einer Baumwollwebware werden mit 70 Teilen einer Klotzflotte imprägniert welche aus

30 Teilen des Farbstoffs XII
30 Teilen des Farbstoffs XIII
25 Teilen Natronlauge von spezifischen Gewicht 1.357 und
915 Teilen Wasser

besteht und 24 Stunden bei 23 °C verweilen gelassen. Nach dem üblichen Spülen und Seifen erhält man eine tiefe Scharlachfärbung mit guten Echtheitseigenschaften.

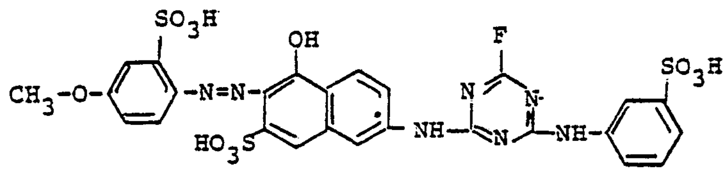

(XII)

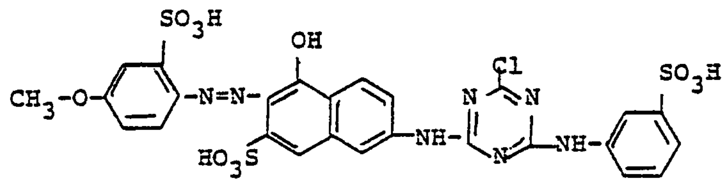

(XIII)

Beispiel 6

100 Teile einer Fasermischung bestehend aus 50 Teilen Baumwolle und 50 Teilen Zellwolle werden mit 1 500 Teilen einer 30 °C warmen Flotte behandelt, welche aus

3 Teilen des Farbstoffs XII
3 Teilen des Farbstoffs XIII
2 Teilen Soda
3 Teilen Natronlauge vom spezifischen Gewicht 1.357
50 Teilen Natriumsulfat und
1 439 Teilen Wasser

besteht.

Nach 15 Minuten Behandlung bei 30 °C wird in 60 Minuten auf 80 °C erwärmt und 30 Minuten bei dieser Temperatur gefärbt. Nach dem üblichen Spülen und Seifen erhält man eine egale Scharlachfärbung mit guten Echtheitseigenschaften.

**Ansprüche**

1. Verfahren zum Färben von Cellulosefasern, dadurch gekennzeichnet, daß man mindestens zwei verschiedene Reaktivfarbstoffe einsetzt, deren Färbungen auf Cellulose den gleichen Farbton ergeben und die eine um mindestens dem Faktor 10 verschiedene Reaktivität besitzen.

2. Verfahren gemäß Anspruch 1, dadurch gekennzeichnet, daß man mindestens zwei verschiedene Reaktivfarbstoffe aus jeweils einer der folgenden Kombinationsreihen 1) bis 10) miteinander kombiniert :

1) Dichlortriazinyl-, Monofluortriazinyl-, Monochlortriazinyl-Reaktivfarbstoff,
2) Dichlortriazinyl-, Dichlorchinoxalinyl-, Monochlortriazinyl-Reaktivfarbstoff,
3) Dichlortriazinyl-, Monofluortriazinyl-, Trichlorpyrimidinyl-Reaktivfarbstoff,
4) Difluorpyrimidinyl-, Sulfatoethylsulfonyl-, Trichlorpyrimidinyl-Reaktivfarbstoff,
5) Dichlorchinoxalinyl-, Sulfatoethylsulfonyl-, Trichlorpyrimidinyl-Reaktivfarbstoff,
6) Monofluortriazinyl-, Sulfatoethylsulfonyl-, Trichlorpyrimidinyl-Reaktivfarbstoff,
7) Dichlortriazinyl-, Monofluorpyrimidinyl-, Trichlorpyrimidinyl-Reaktivfarbstoff,
8) Dichlorchinoxalinyl-, Monofluorpyrimidinyl-, Trichlorpyrimidinyl-Reaktivfarbstoff,
9) Difluorpyrimidinyl-, Monofluorpyrimidinyl-, Trichlorpyrimidinyl-Reaktivfarbstoff,
10) Monofluortriazinyl-, Monofluorpyrimidinyl-, Trichlorpyrimidinyl-Reaktivfarbstoffe.

3. Verfahren gemäß Anspruch 1 oder 2, dadurch gekennzeichnet, daß man Reaktivfarbstoffe verwendet, deren optimale Fixiertemperatur sich um mindestens 20 bis 40° unterscheidet.

4. Verfahren gemäß Anspruch 1 bis 3, dadurch gekennzeichnet, daß man Reaktivfarbstoffe verwendet, die im pH-Bereich von 8 bis 13 ihr Fixieroptimum besitzen.

5. Verfahren gemäß Anspruch 1 bis 4, dadurch gekennzeichnet, daß man Reaktivfarbstoffe verwendet, die im pH-Bereich von 9 bis 12 ihr Fixieroptimum besitzen.

6. Verfahren gemäß Anspruch 1 bis 5, dadurch gekennzeichnet, daß man Reaktivfarbstoffe verwendet, die den gleichen Chromophor aufweisen.

7. Verfahren gemäß Anspruch 1 bis 6, dadurch gekennzeichnet, daß man Reaktivfarbstoff-Mischungen verwendet, in welcher von jeder Farbe mindestens zwei Farbstoffe mit Reaktivgruppen unterschiedlicher Reaktivität vorliegen.

8. Verfahren gemäß Anspruch 1 bis 7, dadurch gekennzeichnet, daß die Mischungsverhältnisse der gleichfarbigen Reaktivfarbstoffe unterschiedlicher Reaktivität von 1 : 4 bis 4 : 1 vorliegen.

9. Verfahren gemäß Anspruch 1 bis 8, dadurch gekennzeichnet, daß man im Temperaturbereich von 20 bis 130 °C färbt.

**Claims**

1. Process for dyeing cellulose fibres, characterised in that at least two different reactive dyestuffs which give dyeings of the same colour shade on cellulose and which have reactivities which differ by a factor of at least 10 are employed.

2. Process according to Claim 1, characterised in that at least two different reactive dyestuffs from in each case one of the following combination series 1) to 10) are combined with one another:

1) a dichlorotriazinyl, a monofluorotriazinyl and a monochlorotriazinyl reactive dyestuff,
2) a dichlorotriazinyl, a dichloroquinoxalinyl and a monochlorotriazinyl reactive dyestuff,
3) a dichlorotriazinyl, a monofluorotriazinyl and a trichloropyrimidinyl reactive dyestuff,
4) a difluoropyrimidinyl, a sulphatoethylsulphonyl and a trichloropyrimidinyl reactive dyestuff,
5) a dichloroquinoxalinyl, a sulphatoethylsulphonyl and a trichloropyrimidinyl reactive dyestuff,
6) a monofluorotriazinyl, a sulphatoethylsulphonyl and a trichloropyrimidinyl reactive dyestuff,
7) a dichlorotriazinyl, a monofluoropyrimidinyl and a trichloropyrimidinyl reactive dyestuff,
8) a dichloroquinoxalinyl, a monofluoropyrimidinyl and a trichloropyrimidinyl reactive dyestuff,
9) a difluoropyrimidinyl, a monofluoropyrimidinyl and a trichloropyrimidinyl reactive dyestuff or
10) monofluorotriazinyl, monofluoropyrimidinyl and trichloropyrimidinyl reactive dyestuffs.

3. Process according to Claim 1 or 2, characterised in that reactive dyestuffs of which the optimum fixing temperatures differ by at least 20 to 40° are used.

4. Process according to Claims 1 to 3, characterised in that reactive dyestuffs which have optimum fixing characteristics in the pH range from 8 to 13 are used.

5. Process according to Claims 1 to 4, characterised in that reactive dyestuffs which have optimum fixing characteristics in the pH range from 9 to 12 are used.

6. Process according to Claims 1 to 5, characterised in that reactive dyestuffs which carry the same chromophore are used.

7. Process according to Claims 1 to 6, characterised in that reactive dyestuff mixtures are used in which, of each colour, at least two dyestuffs with reactive groups of different reactivity are present.

8. Process according to Claims 1 to 7, characterised in that the ratios of reactive dyestuffs of the same colour and different reactivity in the mixtures are 1 : 4 to 4 : 1.

9. Process according to Claims 1 to 8, characterised in that the dyeing is carried out in the temperature range from 20 to 130 °C.

**Revendications**

1. Procédé de teinture de fibres de cellulose, caractérisé en ce qu'on utilise au moins deux colorants réactifs différents dont les teintures donnent la même nuance de teinte sur la cellulose et qui possèdent une réactivité différant au moins d'un facteur 10.

2. Procédé selon la revendication 1, caractérisé en ce qu'on combine au moins deux colorants réactifs différents choisis chaque fois dans l'une des séries de combinaisons 1 à 10 :

1) colorant réactif contenant un groupe dichlorotriazinyle, monofluorotriazinyle, monochlorotriazinyle,

2) colorant réactif contenant un groupe dichlorotriazinyle, dichloroquinoxalinyle, monochlorotriazinyle,

3) colorant réactif contenant un groupe dichlorotriazinyle, monofluorotriazinyle, trichloropyrimidinyle,

4) colorant réactif contenant un groupe difluoropyrimidinyle, sulfatoéthylsulfonyle, trichloropyrimidinyle,

5) colorant réactif contenant un groupe dichloroquinoxalinyle, sulfatoéthylsulfonyle, trichloropyrimidinyle,

6) colorant réactif contenant un groupe monofluorotriazinyle, sulfatoéthylsulfonyle, trichloropyrimidinyle,

7) colorant réactif contenant un groupe dichlorotriazinyle, monofluoropyrimidinyle, trichloropyrimidinyle,

8) colorant réactif contenant un groupe dichloroquinoxalinyle, monofluoropyrimidinyle, trichloropyrimidinyle,

9) Colorant réactif contenant un groupe difluoropyrimidinyle, monofluoropyrimidinyle, trichloropyrimidinyle,

10) colorant réactif contenant un groupe monofluorotriazinyle, monofluoropyrimidinyle, trichloropyrimidinyle.

3. Procédé selon la revendication 1 ou 2, caractérisé en ce qu'on utilise les colorants réactifs dont la température de fixation optimale diffère d'au moins 20° à 40°.

4. Procédé selon l'une des revendications 1 à 3, caractérisé en ce qu'on utilise des colorants réactifs qui possèdent leur optimum de fixation dans l'intervalle de pH de 8 à 13.

5. Procédé selon l'une des revendications 1 à 4, caractérisé en ce qu'on utilise des colorants réactifs qui possèdent leur optimum de fixation dans un intervalle de pH de 9 à 12.

6. Procédé selon l'une des revendications 1 à 5, caractérisé en ce qu'on utilise des colorants réactifs qui présentent le même chromophore.

7. Procédé selon l'une des revendications 1 à 6, caractérisé en ce qu'on utilise des mélanges de colorants réactifs dans lesquels, pour chaque couleur, il y a au moins deux colorants ayant des groupes réactifs de réactivité différente.

8. Procédé selon l'une quelconque des revendications 1 à 7, caractérisé en ce que les rapports de mélange des colorants réactifs de même couleur et de réactivité différente se situent entre 1 : 4 et 4 : 1.

9. Procédé selon l'une quelconque des revendications 1 à 8, caractérisé en ce qu'on teint dans un intervalle de température de 20° à 130 °C.